Europäisches Patentamt

European Patent Office

Office européen des brevets

(11) Numéro de publication: **0 413 142 A2**

# (12) DEMANDE DE BREVET EUROPEEN

(21) Numéro de dépôt: **90113424.7**

(22) Date de dépôt: **13.07.90**

(51) Int. Cl.5: **G01C 5/06**

(30) Priorité: **18.08.89 CH 3010/89**

(43) Date de publication de la demande:
**20.02.91 Bulletin 91/08**

(84) Etats contractants désignés:
**AT BE CH DE DK ES FR GB GR IT LI LU NL SE**

(71) Demandeur: **SARCEM AUTOMATION**
**27, rue du Cardinal-Journet**
**CH-1217 Meyrin 1(CH)**

(72) Inventeur: **Bonello, Philippe**
**26, Chemin du Pommier**
**CH-1218 Grand-Saconnex(CH)**

(74) Mandataire: **Micheli & Cie**
**Rue de Genève 122, Case Postale 61**
**CH-1226 Genève-Thonex(CH)**

(54) **Altimètre.**

(57) Il comprend un bâti (7-11; 14, 15), un affichage comprenant des tambours (45, 79) et un cadran (23) coopérant avec une aiguille (46) et un train d'engrenage multiplicateur (53 à 57) entraînant l'affichage à partir de déplacements obtenus par des éléments anéroïdes (1 à 4). Il comporte plusieurs éléments anéroïdes (1 à 4) cylindriques coaxiaux reliés ensemble et au bâti (7-11) de l'altimètre; Cet empilage est divisé en deux groupes (1,2 ; 3,4) antagonistes. Les faces libres des deux groupes (1,2 ; 3,4) d'éléments anéroïdes de l'empilage sont reliées cinématiquement à un même mobile (31), ce mobile commun engrenant en des points diamètralement opposés avec deux organes dentés (29, 30) appartenant chacun à l'une desdites liaisons cinématiques. Le mobile (31) entraîne l'affichage (45, 79, 23, 46) par l'intermédiaire du train d'engrenage multiplicateur (53-57). L'axe de l'empilage des éléments anéroïdes (1-4) est parallèle à l'axe de l'aiguille (46) de l'affichage.

FIG. 1

La présente invention a pour objet un altimètre de petites dimensions dont le mécanisme doit, pour des raisons de puissance mécanique, être équipé de deux capsules anéroïdes, chaque capsule étant elle-même composée d'un ou généralement de plusieurs éléments anéroïdes.

De tels altimètres sont décrits dans la demande de brevet suisse de la titulaire No 2060/89 déposée le 1er juin 1989. L'altimètre décrit dans ce document fait intervenir des éléments de transmission de mouvement par tringleries coulissantes, ce qui dans certaines conditions extrêmes d'utilisation peut provoquer des mal-fonctionnements du fait de trop grandes forces de friction devant être vaincues par la force développée par les éléments anéroïdes.

Pour pallier à cet inconvénient, la titulaire a développé un nouveau mécanisme de transmission du mouvement des capsules anéroïdes au rouage multiplicateur de l'altimètre, constituant une forme d'exécution particulièrement avantageuse d'un tel altimètre.

Un objet du présent brevet est la réalisation d'un altimètre de faible encombrement, par exemple d'un diamètre de deux pouces, disposant d'une puissance mécanique accrue et comportant un mécanisme de transmission du mouvement introduisant très peu ou pas de frottement.

Le présent altimètre est défini par les caractéristiques de la revendication 1.

Le dessin annexé illustre schématiquement et à titre d'exemple deux formes d'exécution de l'altimètre selon la présente invention.

La figure 1 est une vue en coupe longitudinale du mécanisme de l'altimètre.

La figure 2 en est une vue de dessus de l'altimètre illustré à la figure 1.

La figure 3 représente un détail en perspective de l'altimètre illustré aux figures 1 et 2.

La figure 4 illustre une partie du châssis de l'altimètre.

La figure 5 est une représentation partielle d'une variante du mécanisme de l'altimètre.

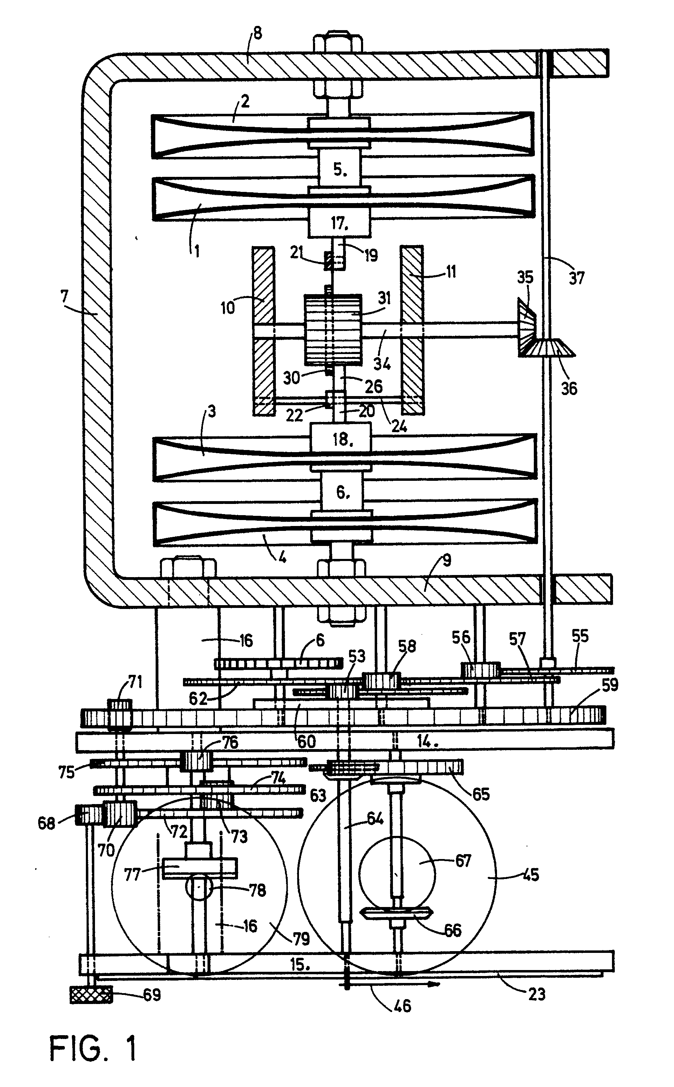

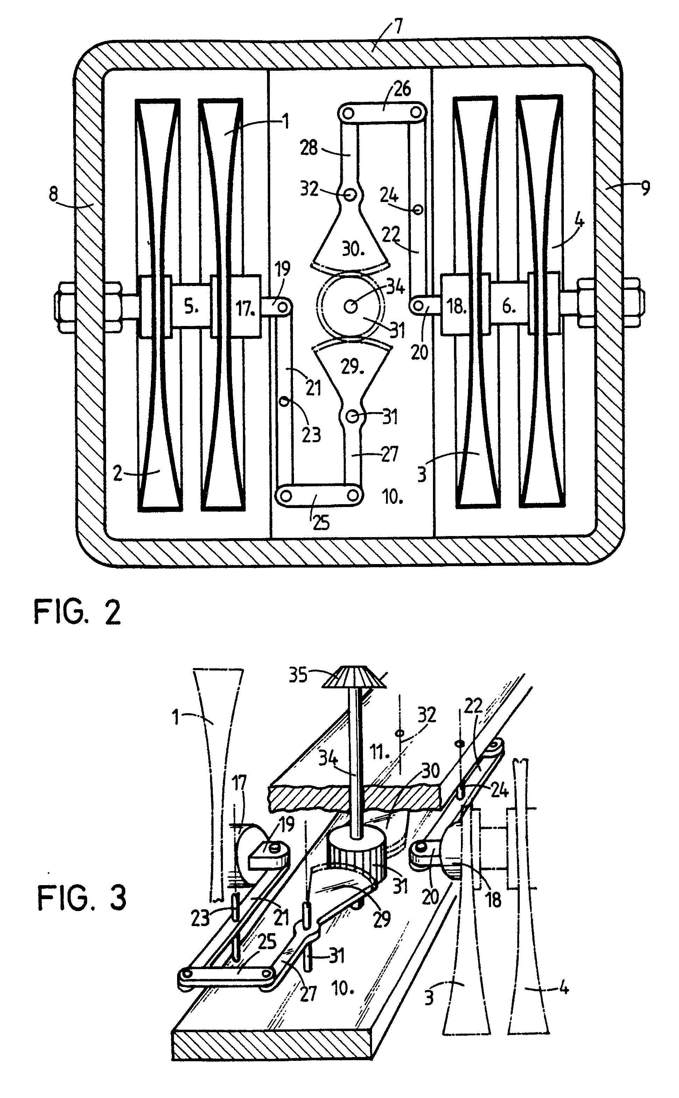

L'altimètre et son mécanisme représentés aux figures 1 à 4 dans sa première forme d'exécution comprend quatre éléments anéroïdes 1, 2, 3 et 4 groupés en deux capsules la première comprenant les éléments 1 et 2 fixés ensemble par l'entretoise 5 et la seconde les éléments 3 et 4 fixés ensemble par l'entretoise 6.

Le châssis comprend le berceau 7-9 ainsi que deux platines 14, 15 circulaires parallèles entre elles et parallèles aux parois 8, 9 du berceau. Comme on le verra plus loin, le berceau 7-9 est monté rotatif à friction sur la platine 14 qui elle est rigidement fixée sur la platine 15. Le berceau 7-9 est fixé rigidement à une grande roue 59 par des piliers 16.

Tout le mécanisme de l'altimètre est monté sur ce châssis 7-9 et est emboîté dans un boîtier dont la paroi arrière comporte un canal d'amenée d'air muni de deux filtres l'un grossier et l'autre fin, montés l'un derrière l'autre, ainsi qu'éventuellement si nécessaire un connecteur électrique permettant le raccordement des lampes (non illustrée) illuminant un cadran et dans certaines exécutions l'alimentation d'un vibreur électromécanique. Ce boîtier comporte dans sa paroi cylindrique une rainure permettant le passage des fils électriques du connecteur à la partie avant du boîtier.

La face frontale de ce boîtier comporte une paroi renforcée de forme dodécagonale régulière. Une glace, maintenue par une lunette vissée, obture la face frontale de l'altimètre.

La capsule formée par les éléments anéroïdes 1, 2 est rigidement fixée par le moyeu de l'élément anéroïde 2 sur la paroi 8 du berceau, tandis que la capsule formée des éléments anéroïdes 3, 4 est rigidement fixée par le moyeu de l'élément anéroïde 4 sur la paroi 9 du berceau 7-9.

Le berceau 7-9 comporte encore deux traverses 10, 11 reliant des portions opposées de la paroi cylindrique 7 et situées entre les deux capsules anéroïdes.

Lorsque ce mécanisme pour altimètre est soumis à la variation de pression s'étalant de 1013,25 à 115,97 millibars, chaque élément anéroïde 1, 2, 3 et 4 se déforme d'une quantité par exemple de 2,5 millimètres, ainsi, la capsule comprenant les éléments anéroïdes 1 et 2 se déformera d'une quantité de 5 millimètres et, simultanément, la capsule comprenant les éléments anéroïdes 3 et 4 se déformera dans le sens opposé également d'une quantité de 5 millimètres, par exemple. Dans cette forme d'exécution les capsules d'éléments anéroïdes 1, 2; 3, 4 sont appairées de manière à présenter des déformations linéaires identiques pour des variations de pression atmosphérique données.

Les parties centrales 17, 18 se faisant face des éléments anéroïdes 1 respectivement 3 comportent une patte 19, 20 articulée par un axe sur un levier 21, 22, lui-même pivoté dans sa partie médiane sur un axe 23, 24 fixé dans les traverses 10, 11. L'autre extrêmité du levier 21, 22 est reliée par une bielette 25, 26 à la tige arrière 27, 28 d'un secteur denté 29, 30. Les bielettes 25, 26 sont pivotées à leurs extrémités sur les le viers 21, 22 respectivement les tiges 27, 28 tandis que les secteurs dentés 29, 30 sont pivotés autour d'un axe 31, 32 fixé dans les traverses 10, 11.

Les deux secteurs dentés 29, 30 sont simultanément en prise avec les côtés opposés d'un pignon 33 porté par un arbre 34 pivoté dans les traverses 10, 11 et dont l'extrêmité supérieure, dirigée vers la partie ouverte du berceau 7-9, porte un pignon d'angle 35. Ce pignon d'angle 35 est en prise avec un pignon d'angle 36 porté par un arbre 37 tourillonné dans les parois 8-9 du berceau 7-9 et portant à l'une de ses extrêmités la roue 55 du rouage multiplicateur entraînant l'affichage.

La roue 55 engrène avec un pignon 56 qui porte la roue 57. Cette dernière 57 engrène avec un pignon 58 qui porte une roue qui finalement engrène avec le pignon central 53.

L'ensemble des mobiles du train multiplicateur pivote d'une part dans des paliers rubis du châssis 8-15. D'autre part, le pivotement des mobiles se fait dans une grande roue 59 solidaire du berceau 7-9 au moyen des piliers 16 qui sont rivés et fixés au berceau. Tous ces éléments y compris la grande roue 54 forment un ensemble rigide pour lui-même relié au module d'affichage par un élément à friction (ressort ondulé circulaire) coiffé par un disque de serrage 60. Le ressort spiral 61 permet le rattrapage de jeu d'engrenage. Il est monté sur une roue 62 identique à la roue 57 et en prise avec celle-ci.

Pour l'affichage, une roue 63 chassée sur l'axe central 64 engrène avec une roue 65 portant une troisième roue d'angle 66 qui engrène avec une quatrième roue d'angle 67 située sur l'axe des tambours d'affichage 45.

La correction des millibars est assurée par un pignon 68 sur l'axe d'un bouton 69 engrènant avec un pignon 70 qui porte un pignon 71 engrènant avec la grande roue 59. Par ailleurs, le pignon 70 engrène avec une roue 72 qui porte un pignon 73 qui engrène avec une roue 74 qui porte la roue 75 engrènant avec le pignon 76 dont l'axe porte la roue cloche 77 qui finalement engrène avec le pignon digit 78 entraînant les tambours d'affichage de correction 79.

Une rotation du bouton 69 provoque ainsi de façon connue simultanément une modification de l'affichage à tambour de correction 79 et une rotation de la grande roue 59, donc de l'ensemble porté par le berceau 7-9 et donc de l'aiguille 46 ainsi que des tambours d'affichage 45 indépendamment d'une variation de pression atmosphérique.

Dans cette forme d'exécution, chaque capsule anéroïde comportant un ou plusieurs éléments anéroïdes est fixée pour elle-même sur une des parois terminales 8, 9 du berceau et la face intérieure se faisant face de chaque capsule entraîne des liaisons cinématiques ne faisant intervenir que des pivotements provoquant l'entraînement du pignon central 33.

On obtient donc le même effet multiplicateur de force que dans l'altimètre décrit dans la demande de brevet citée dans l'introduction, tout en réduisant le frottement puisque tout coulissement a été supprimé dans la transmission du mouvement. Le rouage multiplicateur est lui identique dans les deux cas de même que le mécanisme de correction et l'affichage.

Cette forme d'exécution est de plus plus simple et nécessite moins de pièces et de réglage, ce qui en augmente la fiabilité.

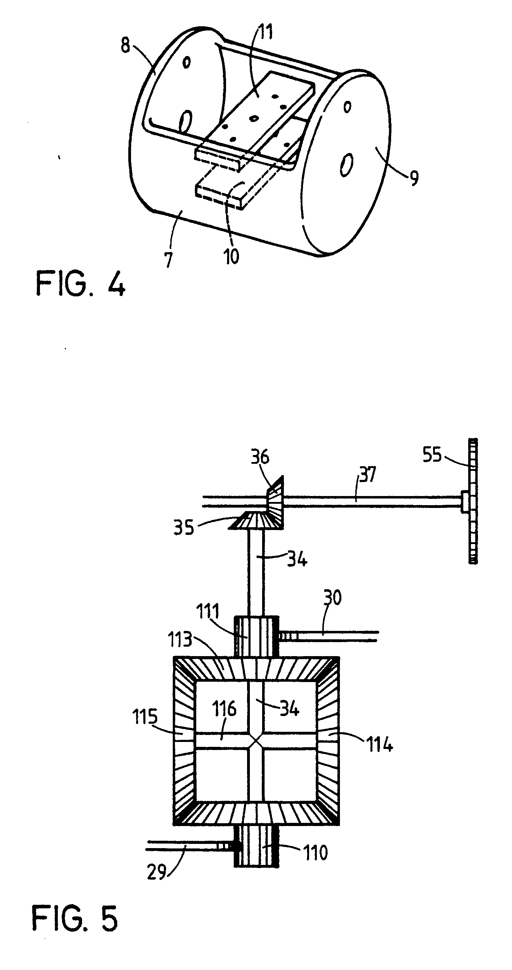

Dans la variante illustrée à la figure 5, le pignon central 33 est remplacé par un différentiel, ce qui évite la nécessité d'apairer les capsules anéroïdes. En effet, dans une telle réalisation, chaque secteur denté 29, 30 est en prise avec un pignon 110, 111 solidaire d'une roue d'angle 112, 113 respectivement pivotée folle sur l'arbre 34.

Les deux roues coniques 112, 113 sont simultanément en prise avec deux roues coniques 114, 115 tourillonées sur un axe 116 perpendiculaire à l'axe 34 et solidaire de celui-ci. Ainsi, la rotation de l'axe 34 est assurée par les deux secteurs dentés 29, 30 dont la force est additionnée, toutefois si les déplacements angulaires de ces secteurs dentés ne sont pas absolument identiques la différence est reprise par le différentiel 112-115 évitant ainsi tout risque de coincement.

## Revendications

1. Altimètre de faible encombrement comportant un bâti, un affichage comprenant des tambours et un cadran coopérant avec une aiguille et un train d'engrenage multiplicateur entraînant l'affichage à partir de déplacements obtenus par des éléments anéroïdes, caractérisé par le fait qu'il comporte plusieurs éléments anéroïdes cylindriques coaxiaux reliés ensemble et au bâti de l'altimètre; par le fait que cet empilage est divisé en deux groupes antagonistes; par le fait que les faces libres des deux groupes d'éléments anéroïdes de l'empilage sont reliées cinématiquement à un même mobile, ce mobile commun engrenant en des points diamètralement opposés avec deux organes dentés appartenant chacun à l'une desdites liaisons cinématiques; par le fait que ce mobile entraîne l'affichage par l'intermédiaire du train d'engrenage multiplicateur; et par le fait que l'axe de l'empilage des éléments anéroïdes est parallèle à l'axe de l'aiguille de l'affichage, soit à l'axe longitudinal de l'altimètre ou de son boîtier.

2. Altimètre selon la revendication 1, caractérisé par le fait que l'empilage contient quatre éléments anéroïdes groupés en deux capsules de chacune deux éléments.

3. Altimètre selon les revendications 1 et 2, caractérisé par le fait que chaque capsule est fixée sur une des parois latérales d'un berceau du bâti; que leurs sens de déformation sont opposés, l'un dirigé vers l'avant de l'appareil, l'autre vers l'arrière de ce dernier.

4. Altimètre selon l'une des revendications précédentes, caractérisé par le fait que le berceau du bâti comporte des parois latérales parallèles entre elles et parallèles aux éléments anéroïdes, reliées ensemble par un secteur de couronne placé hors de l'espace d'encombrement occupé par l'ensemble de ces éléments anéroïdes; et par le fait que ce berceau comporte au moins une traverse s'étendant perpendiculairement à l'axe de l'empilage d'éléments anéroïdes et située entre les deux groupes de ces éléments anéroïdes.

5. Altimètre selon l'une des revendications précédentes, caractérisé par le fait que les deux faces libres de l'empilage d'éléments anéroïdes se font face et que chacune d'elles entraîne un secteur denté en rotation par une liaison cinématique ne comportant que des mouvements de pivotement.

6. Altimètre selon la revendication 5, caractérisé par le fait que les secteurs dentés sont pivotés sur lesdites traverses du berceau et engrènent avec ledit mobile.

7. Altimètre selon la revendication 6, caractérisé par le fait que ledit mobile est constitué par un pignon, les deux capsules anéroïdes étant apairées.

8. Altimètre selon la revendication 6, caractérisé par le fait que ledit mobile est constitué par un différentiel.

9. Altimètre selon l'une des revendications 7 ou 8, caractérisé par le fait que le mobile entraîne un arbre comportant un pignon d'angle en prise avec un pignon d'angle solidaire d'un arbre pivoté dans les parois latérales du berceau et portant le premier mobile du rouage multiplicateur.

FIG. 1

FIG. 2

FIG. 3

FIG. 4

FIG. 5